Europäisches Patentamt

European Patent Office

Office européen des brevets

(19)

(11) Veröffentlichungsnummer: **0 446 437 A2**

## (12) EUROPÄISCHE PATENTANMELDUNG

(21) Anmeldenummer: 90123235.5

(51) Int. Cl.5: **H04Q 3/52**

(22) Anmeldetag: 04.12.90

(30) Priorität: 13.03.90 DE 4007976

(43) Veröffentlichungstag der Anmeldung:
**18.09.91 Patentblatt 91/38**

(84) Benannte Vertragsstaaten:
**AT BE CH DE FR GB IT LI NL SE**

(71) Anmelder: **Siemens Aktiengesellschaft**
**Wittelsbacherplatz 2**
**W-8000 München 2(DE)**

(72) Erfinder: **Witte, Hans-Hermann, Dr.**
**Hippelstrasse 15**
**W-8000 München 82(DE)**

(54) **Optische Matrix.**

(57)
2.1 Bei optischen Schaltmatrizen, bei denen erste Wellenleiter ($eW_i$) von zweiten Wellenleitern ($zW_j$) gekreuzt werden und in jedem Kreuzungspunkt ein schaltbarer optischer Koppler ($K_{ij}$) angeordnet ist, der einen Leistungsanteil einer in einem Wellenleiter geführten optischen Welle in den anderen auskoppelt, besteht das Problem, daß herkömmliche elektrooptische Schaltprinzipien aus verschiedenen Gründen Matrizen mit nur wenigen, etwa 8x8 Ein- und Ausgängen zulassen. Eine solche Schaltmatrix soll nun auf kleinstem Raum beispielsweise 100x100 oder mehr optischen Kopplern realisierbar sein.

2.2 Dazu weist jeder optische Koppler ($K_{ij}$) einen gezielt geringen Auskoppelgrad auf, der kleiner als der Kehrwert (1/N) der Anzahl (N) der Ausgänge der Matrix ist. Der geringe Auskoppelgrad ist nur scheinbar ein Nachteil. Es ergeben sich vielmehr eine Reihe von Vorteilen. Eine solche Matrix ist auch mit unschaltbaren Kopplern realisierbar.

3.1 Anwendung in Neuronalen Netzen oder Verteilnetzen

FIG 1

EP 0 446 437 A2

Die Erfindung betrifft eine optische Matrix nach dem Oberbegriff des Patentanspruchs 1.

Unter Matrizen der genannten Art fallen beispielsweise Schaltmatrizen, bei denen in jedem Kreuzungspunkt zwischen einem ersten und einem zweiten Wellenleiter je ein individuell zwischen zwei Schaltzuständen schaltbarer optischer Koppler angeordnet ist, der in einem der beiden Schaltzustände einen Leistungsanteil einer in einem der beiden in diesem Kreuzungspunkt sich kreuzenden Wellenleiter geführten optischen Welle in den anderen dieser beiden Wellenleiter einkoppelt.

Für die optischen Koppler derartiger Schaltmatrizen kommen grundlegende elektro-optische Schaltprinzipien in Frage, die auf LiNbO$_3$ hergestellt worden sind und die grob in folgende drei Typen eingeteilt werden können:

a) Mach-Zehnder-Struktur

b) Richtkoppler-Struktur

c) Durchkreuzungs- oder x-Struktur.

Für die Implementierung einer Schaltmatrix mit M ersten und N zweiten Wellenleitern - M und N sind jeweils vorgebbare natürliche Zahlen - ist es mit wachsendem N und/oder M entscheidend, daß die einzelnen optischen Koppler in folgenden Eigenschaften günstige Werte aufweisen:

d) Durchgangsverlust,

e) Nebensprechen,

f) Baulänge

g) Schaltleistung/Schaltgeschwindigkeit.

Herkömmliche Schaltprinzipien erfüllen diese Forderungen jeweils nur teilweise.

Wegen der großen Längen von 15 bis 20 mm pro Koppler (siehe Optical and Quantum Electronics, 21, 1989, S. 1) eignen sich Koppler mit Mach-Zehnder-Struktur für große Schaltmatrizen mit großem M und/oder N, beispielsweise M = N = 100 oder größer, nicht, weil die Anordnung solcher Matrizen viel zu groß wird und beispielsweise technologische Probleme aufwirft.

Auch Koppler mit Richtkoppler-Struktur (siehe J. Lightwave Techn. LT-5, No. 9, 1987, S. 1229) sind wegen ihrer großen Baulänge für große Schaltmatrizen nicht geeignet.

Eher geeignet für große Schaltmatrizen erscheinen Koppler mit Durchkreuzungsstruktur. Die wesentlichen Konfigurationen dieser Struktur sind die y-Gabel (siehe Appl. Physics Letters 29, 1976, S. 790), die BOA-Struktur (siehe Appl. Physics Letters 31, 1977, S. 266), der Bragg-Schalter (siehe Appl. Physics Letters 33, 1978, S. 33), der x-Schalter (siehe Electron. Letters 19, 1983, S. 553) und der Schalter mit totaler interner Reflexion (siehe IEEE J. Quantum Electron. QE-14, 1978, S. 513). Da bei diesen Kopplern die Koppelbereiche mehrmodig ausgebildet sind und die Durchkreuzungswinkel nur wenige Grad betragen, ist das Nebensprechen hoch, typisch -20 dB, vereinzelte beste Werte werden mit -30 dB angegeben. Überdies sind bei dem aus der obigen Literaturstelle bekannten Bragg-Schalter, wie dort angegeben, die Einfügeverluste hoch, so daß dieser Schaltertyp allein schon aus diesem Grund für eine Schaltmatrix ungeeignet ist.

Eine weitere Möglichkeit einer Realisierung eines optischen Kopplers für eine Schaltmatrix ist die Steuerung der Auskopplung über einen elektro-optisch erzeugten homogenen Bereich erhöhter Brechzahl. Diese Möglichkeit kommt wegen zu kleiner Effekte nicht in Frage, weil die mit diesen Materialien erreichbaren Brechzahlsprünge und die damit erzielbaren Reflektivitäten viel zu klein sind. Beispielsweise erreicht man in LiNbO$_3$ einen Brechzahlsprung $\Delta n$ in der Größenordnung von nur $10^{-3}$.

Eine große Ausdehnung der Schaltmatrix ist nicht nur aus technologischen Gründen unerwünscht, sondern auch dann, wenn alle optischen Koppler zeitlich synchron durch von außen zugeführte Schalt-Signale elektrisch angesteuert werden sollen, weil die RC-Zeitkonstante der elektrischen Leitungen problematisch wird.

Mit den herkömmlichen elektro-optischen Schaltern lassen sich aus den nachstehend genannten Gründen Schaltmatrizen mit nur wenigen, etwa 8x8 Ein- und Ausgängen realisieren.

Aufgabe der Erfindung ist es, eine Matrix der genannten Art anzugeben, die auf kleinstem Raum mit einer Vielzahl von beispielsweise 100x100 oder mehr optischen Kopplern realisierbar ist.

Diese Aufgabe wird durch die im kennzeichnenden Teil des Patentanspruchs 1 angegebenen Merkmale gelöst.

Die erfindungsgemäße Matrix kann sowohl einen oder mehrere schaltbare Koppler als auch einen oder mehrere unschaltbare Koppler mit festem Auskoppelgrad aufweisen. Eine Matrix mit schaltbaren Kopplern bildet eine optische Schaltmatrix.

Der bei der erfindungsgemäßen Schaltmatrix bewußt gering gewählte Auskoppelgrad der schaltbaren optischen Koppler erscheint auf den ersten Blick als nachteilig. Jedoch ist dieser Nachteil nur scheinbar. Es ergeben sich vielmehr, insbesondere mit wachsender Zahl der schaltbaren optischen Koppler, eine Reihe von Vorteilen, die sich besonders bei einer Schaltmatrix nach Anspruch 2 zeigen, bei der alle optischen Koppler schaltbare Koppler sind.

Es werden vorteilhafterweise erreicht:

1) eine Broadcasting-Funktion, d.h. eine gleichmäßige Leistung einer in einem beliebigen Wellenleiter der Matrix geführten optischen Welle an den Eingängen aller schaltbaren Koppler dieses Wellenleiters, auch wenn sich diese Koppler in dem Schaltzustand mit dem geringem Auskoppelgrad befinden;

2) eine Konzentrator-Funktion, d.h. die Leistungsanteile, die von schaltbaren Kopplern auf einem Wellenleiter der Matrix aus den diesen einen Wellenleiter kreuzenden Wellenleiter in diesen einen Wellenleiter eingekoppelt werden, sind einem einzigen Ausgang der Matrix zugeführt;

3) eine geringe Durchgangsdämpfung zwischen irgendeinem Eingang und irgendeinem Ausgang der Matrix;

4) ein äußerst geringes, einen guten Störabstand garantierendes Nebensprechen pro schaltbarem optischem Koppler;

5) ein hoher Störabstand der ganzen Matrix;

6) eine extrem kleine lineare Ausdehnung der Matrix auch bei hoher Zahl von schaltbaren optischen Kopplern und

7) die rein optisch realisierbare Funktion einer Synapsen-Matrix, d.h. eine Funktion, die mathematisch einer Multiplikation eines Vektors mit einer Matrix entspricht und eine Summation umfaßt.

Eine andere besonders vorteilhafte Ausgestaltung der erfindungsgemäßen Matrix weist die in Anspruch 3 angegebenen Merkmale auf, nach denen jeder optische Koppler ein nicht- oder unschaltbarer Koppler mit festem Auskoppelgrad ist. Bei dieser unschaltbaren Matrix kann der feste Auskoppelgrad im wesentlichen beliebig gewählt werden, insbesondere auch größer als der geringe Auskoppelgrad der schaltbaren Koppler.

Bevorzugte Ausgestaltungen dieser unschaltbaren Matrix nach Anspruch 3 gehen aus den Ansprüchen 4 und 5 hervor. Unter diese Ausgestaltungen fallen auch Matrizen, bei denen der feste Auskoppelgrad von Kreuzungspunkt zu Kreuzungspunkt oder von Koppler zu Koppler verschieden ist, oder Matrizen, bei denen alle Koppler den gleichen festen Auskoppelgrad haben.

Bevorzugte und vorteilhafte Ausgestaltungen der erfindungsgemäßen Matrix gehen aus den Ansprüchen 6 bis 9 hervor.

Eine erfindungsgemäße Schaltmatrix ist vorteilhafterweise als Synapsen-Matrix für ein optisch arbeitendes künstliches Neuronales Netz (Anspruch 11), als Matrix in einem Verteilnetzwerk (Anspruch 12) und als optischer Mischer (Anspruch 13) anwendbar.

Die Erfindung wird in der nachfolgenden Beschreibung anhand der Figuren näher erläutert. Es zeigen:

Figur 1    eine schematische Darstellung einer erfindungsgemäßen Schaltmatrix,

Figur 2    eine Draufsicht auf eine beispielhafte Realisierung der Schaltmatrix nach Figur 1,

Figur 3    eine schematische Darstellung eines Neuronalen Netzes, auf das eine erfindungsgemäße Schaltmatrix anwendbar ist, und

Figur 4    eine Draufsicht auf eine beispielhafte Realisierung einer erfindungsgemäßen Matrix mit nicht schaltbaren Kopplern.

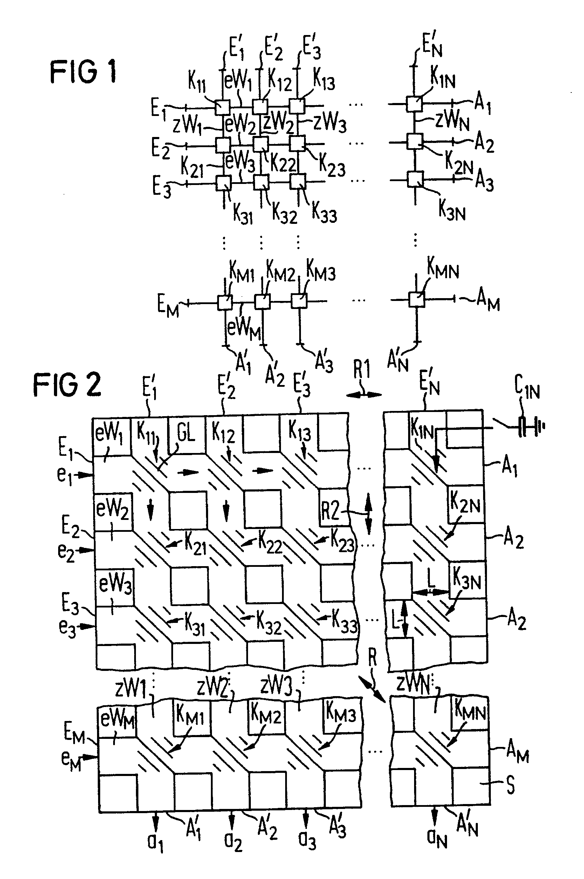

Die Matrix nach Figur 1 besteht aus den beispielsweise waagerecht verlaufenden ersten optischen Wellenleitern $eW_i$ mit $i = 1$ bis M und den diese ersten Wellenleiter $eW_i$ zumindest im wesentlichen senkrecht kreuzenden zweiten optischen Wellenleitern $zW_j$ mit $j = 1$ bis N. In jedem Kreuzungspunkt zwischen einem ersten Wellenleiter $eW_i$ und einem zweiten Wellenleiter $zW_j$ ist ein optischer Koppler $K_{ij}$ angeordnet, der individuell zwischen zwei Schaltzuständen schaltbar ist. Jeder dieser optischen Koppler $K_{ij}$ ist derart ausgebildet, daß er in einem der beiden Schaltzustände einen Leistungsanteil einer in einem der beiden in diesem Kreuzungspunkt sich kreuzenden Wellenleiter $eW_i$ und $zW_j$ geführten optischen Welle in den anderen dieser beiden Wellenleiter $eW_i$ und $zW_j$ auskoppelt, wobei wesentlich ist, daß der Auskoppelgrad dieses Kopplers $K_{ij}$, d.h. das Verhältnis zwischen dem von diesem Koppler $K_{ij}$ ausgekoppelten Leistungsanteil zur Leistung der diesem Koppler $K_{ij}$ zugeführten optischen Welle gezielt gering ist, und daß der Koppler $K_{ij}$ in dem anderen Schaltzustand einen im Vergleich zu dem geringen Auskoppelgrad noch kleineren Auskoppelgrad aufweist.

Geringer Auskoppelgrad bedeutet, daß dieser Auskoppelgrad zumindest größenordnungsmäßig gleich oder vorzugsweise kleiner als der Kehrwert $1/M$ oder $1/N$ der Anzahl M oder N der ersten oder zweiten Wellenleiter $eW_i$ oder $zW_j$ ist. Der noch kleinere Auskoppelgrad sollte so klein wie möglich, am besten gleich null sein. Günstig ist es auch, wenn die Durchgangsdämpfung der Wellenleiter und Koppler so klein wie möglich ist, am besten gleich null.

Der gezielt geringe Auskoppelgrad hat vorteilhafterweise zur Folge, daß sich die ersten und zweiten Wellenleiter $eW_i$ und $zW_j$ unter einem sehr großen Winkel, insbesondere im Winkel von 90° kreuzen können, und daß die Koppler $K_{ij}$ mit extrem kurzer Koppel- oder Baulänge ausgeführt werden können, wodurch wiederum Matrizen mit extrem vielen Kopplern und extrem kleiner Ausdehnung ermöglicht werden.

Für die Realisierung solcher Koppler $K_{ij}$ mit extrem kurzer Baulänge sind die Koppler mit Mach-

3

Zehnder-Struktur oder Richtkoppler-Struktur weniger gut oder nicht geeignet. Bei Kopplern mit Richtkoppler-Struktur könnte zwar zur Erzielung des gewünschten geringen Auskoppelgrades die eigentliche Koppelzone vernachlässigbar kurz gewählt werden, doch würde dadurch die Baulänge des Kopplers nicht wesentlich geringer, weil der Winkel zwischen den zur Koppelzone führenden Eingangswellenleitern und den von dieser Zone fortführenden Ausgangswellenleitern zur Vermeidung von durch Wellenleiterkrümmungen hervorgerufenen Verlusten nur etwa 1° beträgt.

Dagegen eignen sich die Koppler mit Durchkreuzungs- oder x-Struktur zur Realisierung von Kopplern $K_{ij}$ mit geringem Auskoppelgrad und extrem kurzer Baulänge.

Jeder Koppler $K_{ij}$ der Matrix nach Figur 1 läßt beispielsweise eine im betreffenden ersten Wellenleiter $eW_i$ von links nach rechts geführte optische Welle passieren, koppelt aber in dem einen Schaltzustand einen dem geringen Auskoppelgrad entsprechenden geringen Leistungsanteil dieser optischen Welle in den betreffenden zweiten Wellenleiter $zW_j$ aus, in welchem dieser Leistungsanteil beispielsweise nach unten fortgeführt wird. Bei der Matrix nach Figur 1 koppeln insbesondere alle Koppler $K_{ij}$ in der gleichen Richtung aus. Z.B. wird in Bezug auf eine in der Figur 1 entsprechend den waagerechten Pfeilen von links kommende optische Welle an jedem Koppler entsprechend den vertikalen Pfeilen nach unten, eine von rechts kommende optische Welle nach oben, eine von unten kommende optische Welle nach links und eine von oben kommende optische Welle nach rechts teilweise ausgekoppelt.

In der Figur 1 sind die linken Enden der ersten Wellenleiter $eW_i$ mit $E_i$, die rechten Enden dieser Wellenleiter mit $A_i$ bezeichnet. Die oberen Enden der zweiten Wellenleiter $zW_j$ sind mit $E'_j$ und die unteren Enden dieser Wellenleiter mit $A'_j$ bezeichnet. Über alle diese Enden können optische Signale in die Matrix eingekoppelt oder aus der Matrix ausgekoppelt werden. Ohne Beschränkung der Allgemeinheit sei für das folgende beispielhaft angenommen, daß die linken Enden $E_i$ der ersten Wellenleiter $eW_i$ als Eingänge der Matrix und die unteren Enden $A'_j$ der zweiten Wellenleiter $zW_j$ als Ausgänge der Matrix benutzt werden.

Wählt man den Auskoppelgrad der Koppler $K_{ij}$ der Matrix nach Figur 1 jeweils etwa $1/(kN)$ mit $k \geq 1$, beispielsweise $1/(10N)$, wird erreicht, daß das Signal am Eingang jedes Kopplers $K_{ij}$ im ungünstigsten Fall um etwa $k$ %, im Beispiel nur um etwa 10 % schwankt. Dies bedeutet, daß durch geeignete Wahl von $k$ dafür gesorgt werden kann, daß jeder Koppler $K_{ij}$ in dem Schaltzustand mit dem geringen Auskoppelgrad der im betreffenden ersten Wellenleiter $eW_i$ geführten optischen Welle immer nur soviel Energie entnimmt, daß diese Welle energiemäßig praktisch nicht geschwächt wird und somit die Broadcasting-Funktion realisiert ist, die gleichmäßige Leistung am Eingang jedes Kopplers $K_{ij}$ bedeutet.

Die Konzentrator-Funktion wird erhalten, weil die von den Kopplern $K_{ij}$ in einen zweiten Wellenleiter $zW_j$ ausgekoppelten Leistungsanteile von in den ersten Wellenleitern $eW_i$ geführten optischen Wellen auf diesem zweiten Wellenleiter $zW_j$ einem einzigen Ausgang $A'_j$ der Matrix zugeführt werden. Überdies summieren sich diese Leistungsanteile auf.

Zwischen irgendeinem Eingang $E_i$ und Ausgang $A'_j$ der Matrix beträgt die Durchgangsdämpfung etwa $-10\log(k.N)$ dB, im Beispiel $k = 10$ also $-10 \log (10.N)$ dB, wobei N die Zahl der Ausgänge der Matrix bedeutet. Diese Dämpfung beträgt nach dem Prinzip der erfindungsgemäßen Matrix mindestens etwa -30 dB bei Verwendung elektrooptischer Materialien und mindestens etwa -20 dB bei Verwendung organischer Materialien für die Koppler $K_{ij}$. Im Gegensatz dazu wächst die Durchgangsdämpfung bei einer herkömmlichen Matrix mit M Eingängen und N Ausgängen unter Verwendung herkömmlicher elektro-optischer Koppler linear mit der Zahl der passierten Kreuzungspunkte der Matrix, d.h. die Durchgangsdämpfung beträgt bei solchen Matrizen etwa (M + N) dB.

Bei der erfindungsgemäßen Matrix nach Figur 1 beträgt bei einer Variation des Verhältnisses zwischen dem Querdurchmesser oder der Breite des Wellenleiters und der Wellenlänge der in diesem Wellenleiter geführten optischen Welle zwischen und 2 und 10 das Nebensprechen pro Kreuzungspunkt der Matrix weniger als -80 dB. Im Gegensatz dazu kann das Nebensprechen bei herkömmlichen elektrooptischen Schaltern wegen des kleinen Winkels von etwa 1° zwischen den zuführenden und den fortführenden optischen Wellenleitern je nach dem Verhältnis zwischen dem Querdurchmesser und der Breite der Wellenleiter und der Wellenlänge -20 dB bis -30 dB nicht wesentlich unterschreiten.

Der Störabstand der Matrix nach Figur 1, d.h. das Verhältnis P der Nutzleistung zur Summe aller Nebensprechleistungen auf ein und demselben zweiten Wellenleiter $zW_j$ beträgt allgemein

$$P = 10.\log \left[ (c^{M-1}(1-c))/(1-c^{M-1}) \right] + (L_D - L_M)$$

wobei c die Dämpfung eines nicht in den geringen Auskoppelgrad geschalteten Kopplers $K_{ij}$, $L_D$ im logarithmischen Maßstab und negativ gezählt die Durchgangsdämpfung an dem in den geringen Auskoppelgrad geschalteten Koppler $K_{ij}$ und $L_M$ im logarithmischen Maßstab das Nebensprechen pro Koppler bedeuten.

Bei einer erfindungsgemäßen Matrix nach Figur 1 kann beispielsweise c etwa 1, $L_D$ = -30 dB und $L_M$ = -80 dB angenommen werden. Mit diesen Werten beträgt für M = 10 der Störabstand P etwa 40 dB, für M = 100 beträgt P etwa 30 dB.

Im Vergleich dazu gilt bei einer entsprechenden Matrix, bei denen die Koppler herkömmliche $L_iNbO_3$-Richtkoppler sind, für c = 0,79 dB, $L_D$ = -1 dB und $L_N$ = -20 dB. Für M = 10 ergibt sich P zu etwa 4 dB, für M = 100 liegt P bei etwa -90 dB.

Bei der in Figur 2 nicht maßstäblich dargestellten beispielhaften Realisierung der Matrix nach Figur 1 bestehen die ersten und zweiten Wellenleiter $eW_i$ und $zW_j$ aus auf einem gemeinsamen Substrat aus elektro-optischem Material, beispielsweise $L_iNbO_3$, integrierten streifenartigen Wellenleitern, die in einer gemeinsamen Ebene angeordnet sind und sich in den Kreuzungspunkten zumindest im wesentlichen senkrecht schneiden. Die in diesen Kreuzungspunkten angeordneten optischen Koppler $K_{ij}$ bestehen jeweils aus einem elektro-optisch erzeugbaren Bragg-Gitter, dessen Gitterlinien GL zumindest im wesentlichen im Winkel von 45° zur jeweiligen Längsrichtung $R_1$ und $R_2$ der ersten und zweiten Wellenleiter $eW_i$ und $zW_j$ verlaufen und die bei allen Kopplern $K_{ij}$ in der gleichen Richtung R liegen. Jedes dieser Bragg-Gitter kann bekanntermaßen durch nicht dargestellte und nebeneinander in der Richtung R verlaufende streifenartige Elektroden wahlweise erzeugt werden, indem an diese Elektroden eine felderzeugende elektrische Spannung angelegt wird oder nicht (siehe dazu beispielsweise DE-OS 24 43 038 (= GR 74 P 7161 DE).

Für eine Matrix mit M = N = 1000 und beispielsweise einem Auskoppelgrad von etwa $10^{-3}$ muß das Bragg-Gitter einen Beugungswirkungsgrad von $10^{-3}$ aufweisen. Bei $LiNbO_3$ ist bei einer angenommenen Vakuumwellenlänge $\lambda_0$ = 0,8 $\mu$m der optischen Welle und einem realistischen Brechzahlsprung $\Delta n$ von etwa $10^{-3}$ für einen solchen Beugungswirkungsgrad eine Koppellänge L von nur etwa 3,7 $\mu$m erforderlich. Die Linearausdehnung einer 1000x1000 Matrix beträgt dann weniger als 10 mm.

Generell kann angenommen werden, daß bei einer erfindungsgemäßen Matrix die Koppellänge L der optischen Koppler mit dem geringen Auskoppelgrad sehr kurz, beispielsweise 10 $\mu$m bemessen ist. Zusammen mit den im Winkel von 90° verlaufenden ersten und zweiten Wellenleitern wird bei einem Abstand zwischen den Kreuzungspunkten in der Größenordnung von 10 $\mu$m eine lineare Ausdehnung der Matrix auch bei hoher Zahl von Kreuzungspunkten extrem klein. Sie beträgt etwa 10.N $\mu$m, in herkömmlichen Matrizen dagegen mindestens 8.N mm.

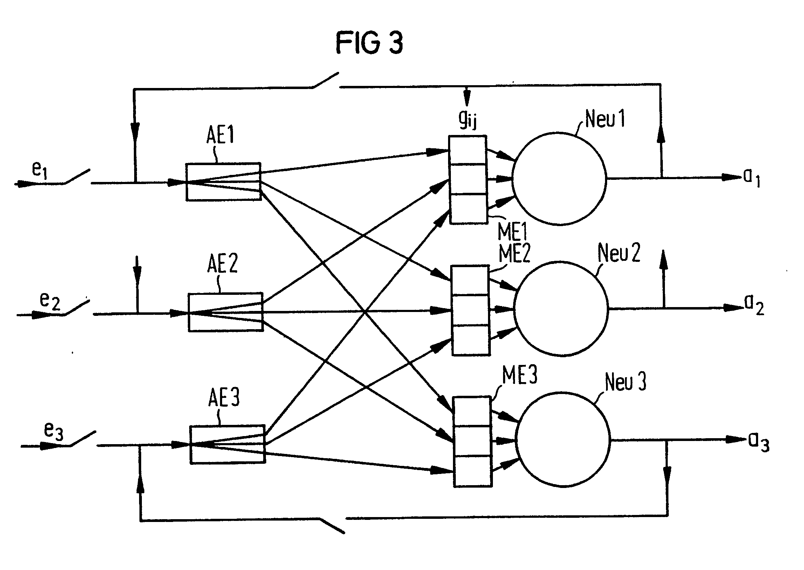

Die erfindungsgemäße Matrix ist für die Realisierung künstlicher Neuronaler Netze (siehe dazu beispielsweise veröffentlichte europäische Patentanmeldung Nr. 0 349 819 A12 (= GR 88 P 1384 E) oder deutsche Patentanmeldung P 38 33 143.8 (= GR 88 P 1668 DE)) geeignet. In solchen Neuronalen Netzen spielt das Verbindungsnetzwerk der Neuronen eine entscheidende Rolle. Die Stärke dieser Verbindung repräsentiert die gespeicherte Information. In Figur 3 sind die wesentlichen Funktionsblöcke eines beispielhaften und optisch realisierbaren Neuronalen Netzes für drei Neuronen Neu1, Neu2 und Neu3 schematisch dargestellt. Eingangssignale $e_1$ bis $e_3$ werden jeweils in zugeordneten Signalaufteileinrichtungen AE1 bis AE3 leistungsmäßig aufgeteilt, die aufgeteilten Signale verschiedener Aufteileinrichtungen AE1 bis AE3 in Matrixmultiplikationseinrichtungen ME1 bis ME3 mit Matrixelementen $g_{ij}$ multipliziert und anschließend in jeweils einem Neuron Neu1, Neu2 und Neu3 aufsummiert oder integriert und nach Maßgabe der Übertragungsfunktion des Neurons verändert. Nach einigen iterativen Schritten hat das System aus dem aus den Eingangssignalen $e_1$, $e_2$, $e_3$ bestehenden Eingangsmuster ein assoziiertes und aus Ausgangssignalen $a_1$, $a_2$ und $a_3$ bestehendes Ausgangsmuster gebildet.

Mathematisch entspricht die Gewichtung der Eingangssignale $e_1$, $e_2$ und $e_3$ oder allgemein $e_1$, $e_2$, ...$e_M$ mit den Gewichten $g_{ij}$ und die anschließende Summation einer Multiplikation der Matrix $(g_{ij})$ mit dem Vektor $(e_1, e_2, ... e_M)$, die ergibt:

$$a_j = \sum_{i=1}^{M} g_{ij} \; e_i \quad \text{mit } j = 1 \text{ bis } N,$$

wobei N im Beispiel nach Figur 3 N = M = 3 ist.

Eine Einrichtung, die eine solche Matrix-Vektor-Multiplikation mit der erforderlichen Summierung leistet, sei als Synapsen-Matrix bezeichnet.

Die physikalische Realisierung einer solchen Synapsen-Matrix ist für Neuronale Netze von zentraler Bedeutung. Die Synapsen-Matrix sollte außerdem optisch arbeiten, d.h., daß die einen Vektor oder ein Muster bildenden Eingangssignale $e_1$ bis $e_M$ und Ausgangssignale $a_1$ bis $a_N$ optisch vorliegen und die Verarbeitung der Eingangssignale in der Matrix optisch erfolgt.

Die erfindungsgemäße Matrix nach Figur 1 oder 2 ist vorteilhafterweise als optisch arbeitende Synapsen-Matrix verwendbar, da in dieser Matrix die durch die Koppler $K_{ij}$ in die zweiten Wellenleiter $zW_j$ ausgekoppelten Leistungsanteile sich zu einem Summensignal aufsummieren. Wegen der Reziprozität der optischen Koppler $K_{ij}$ wird dieses Summensignal in den betreffenden Kreuzungspunkten zwar geschwächt, aber entsprechend der Anzahl dieser Kreuzungspunkte nur gering.

Eine erfindungsgemäße Matrix mit M Eingängen und N Ausgängen realisiert darüber hinaus sogar ein vollständiges Neuronales Netz der Struktur nach Figur 3 mit N Neuronen für M Eingangssignale $e_1$ bis $e_M$, weil aufgrund der auf den ersten Wellenleitern $eW_i$ realisierten Broadcasting-Funktion vorteilhafterweise zugleich die Signalaufteileinrichtungen AEi inhärent realisiert sind.

Der Auskoppelgrad jedes Kopplers $K_{ij}$ sollte größenordnungsmäßig $1/(10.N)$ betragen, was bei 100 Ausgängen bzw. Neuronen einer Auskopplung von -30 dB bzw. einem Einfügeverlust von +30 dB entspricht.

Das Problem der Ansteuerung der Koppler $K_{ij}$ kann so gelöst werden, daß die Steuerinformation jedes Kopplers $K_{ij}$ als Ladungsmenge auf einem diesem Koppler $K_{ij}$ zugeordneten Kondensator $C_{ij}$, beispielsweise in FET-Ausführung, gespeichert ist, der über einen hochohmigen Ausgang praktisch unbelastet ist und die Elektroden des Kopplers $K_{ij}$ wahlweise speist.

Auch an die Matrizen in Verteilnetzen werden die Forderungen nach geringen Einfügeverlusten, geringem Nebensprechen und kurzer Baulänge gestellt. Es sollen Signale von jedem beliebigen der M Eingänge $E_i$ auf jeden beliebigen der N Ausgänge $A_j$ durchgeschaltet werden. Dabei kann es erwünscht sein, daß ein Eingangssignal $e_i$ auf nur einen Ausgang $A_j$ oder gleichzeitig auf mehrere Ausgänge geschaltet wird. Der Auskoppelgrad wird wieder $1/(10.N)$ gewählt. Dadurch beträgt der Einfügeverlust bei der erfindungsgemäßen Matrix etwa $(10 + 10 \log N)$ dB. Bei herkömmlichen Matrizen wächst der Verlust zwischen Eingang und Ausgang linear mit der Anzahl der Koppelpunkte, beträgt also $(M + N)$ dB.

Auf den die Broadcasting-Funktion aufweisenden ersten Wellenleitern $eW_i$ könnten in gewissen Abständen Verstärker mit nicht linearer Kennlinie vorgesehen sein, die die Leistungspegel entlang dieser ersten Wellenleiter $eW_i$ auf einen konstanten Wert anheben. An den Ausgängen $A_j$ der Matrix können Verstärker zum Anheben des Signalpegels vorgesehen sein.

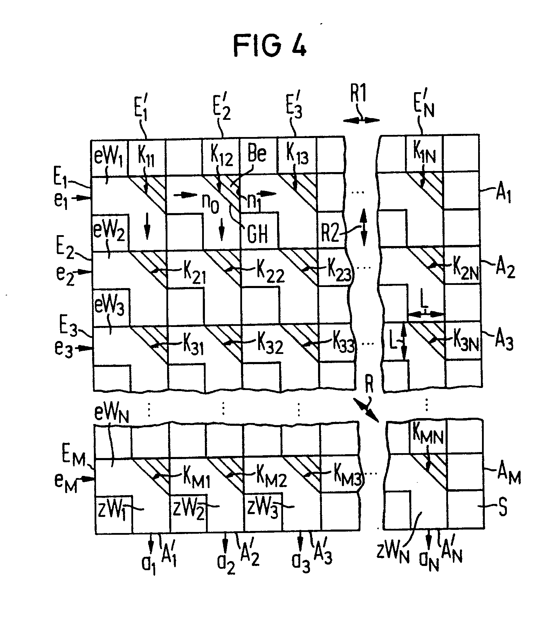

Die beispielhafte Matrix nach Figur 4 unterscheidet sich von der beispielhaften Matrix nach Figur 2 lediglich in den Kopplern $K_{ij}$, die bei der Matrix nach Figur 4 unschaltbare Koppler mit festem Auskoppelgrad sind. Zur Bildung dieser Koppler $K_{ij}$ weisen die ersten und zweiten optischen Wellenleiter $eW_i$ und $zW_j$ in jedem Kreuzungspunkt je einen z.B. dreieckförmigen Bereich Be mit einer Brechzahl $n_1$ auf, die höher ist als die Brechzahl $n_0$ der Wellenleiter $eW_i$ und $zW_j$ außerhalb dieser Bereiche Be. Die schräg, beispielsweise im Winkel von 45° zur Längsrichtung R1 und R2 der ersten und zweiten Wellenleiter $eW_i$ und $zW_j$ verlaufende und durch einen Brechzahlsprung von $n_0$ nach $n_1$ definierte Grenzfläche Gfl jedes Bereiches Be definiert einen unschaltbaren Koppler $K_{ij}$ mit festem Auskoppelgrad.

Jeder Bereich Be kann beispielsweise durch Ionenaustausch, z.B. durch Li-Austausch gegen $H_2$ in $LiNbO_3$ hergestellt werden, wobei Brechzahlunterschiede $\Delta n = n_1-n_0$ bis zu $10^{-1}$ erreicht werden können. Auch mit Ionenimplantation können Brechzahlunterschiede $\Delta n$ bis zu $10^{-1}$ erhalten werden. Durch Steuerung von $\Delta n$ und/oder der Eindringtiefe der Ionen läßt sich der gewünschte Auskoppelgrad festlegen.

Die Matrix nach Figur 4 kann beispielsweise als optischer Mischer oder Sternkoppler verwendet werden, wobei die Auskoppelgrade der unschaltbaren Koppler so gering gewählt werden, daß jedes der zu mischenden Eingangssignale $e_1$ bis $e_M$ sich auf dem horizontalen Weg des ihm zugeordneten ersten Wellenleiters $eW_i$ nur gering, z.B. 10 % geschwächt wird. Durch diesen geringen Auskoppelgrad wird auch die zweite Forderung erfüllt, daß die in einen vertikalen zweiten Wellenleiter $zW_j$ ausgekoppelten und zu dem diesem Wellenleiter zugeordneten Ausgang $A'_j$ aufsummierten Lichtanteile auch nur gering, z.B. schlechtestenfalls um 10 % geschwächt werden, wobei dies für jeden zweiten Wellenleiter $zW_j$ und den ihm zugeordneten Ausgang $A'_j$ gilt. Die zu mischenden Eingangssignale $e_1$ bis $e_M$ werden beispielsweise parallel an die Eingänge $E_1$ bis $E_n$ gegeben, während die gemischten Ausgangssignale $a_1$ bis $a_N$ den Ausgängen $A'_1$ bis $A'_N$ entnommen werden können.

Die Ähnlichkeit der Matrizen nach den Figuren 2 und 4 ermöglicht auch die einfache und billige Realisierung von winzigen optischen Matrizen mit einer Vielzahl von optischen Kopplern, bei denen anwendungsbedingt sowohl schaltbare Koppler mit geringem Ankoppelgrad als auch unschaltbare Koppler mit festem Ankoppelgrad vorhanden sind, wobei in einer Matrix auch beide Kopplerarten realisiert sein können.

**Patentansprüche**

1. Optische Matrix mit

- einer Anzahl (M) von nebeneinander verlaufenden ersten optischen Wellenleitern (eW$_i$) und
- einer Anzahl (N) von nebeneinander verlaufenden und die ersten Wellenleiter (eW$_i$) kreuzenden zweiten Wellenleitern (zW$_j$),
- wobei in jedem Kreuzungspunkt zwischen einem ersten und einem zweiten Wellenleiter (eW$_i$, zW$_j$) je ein optischer Koppler (K$_{ij}$) angeordnet ist, der einen durch einen vorgebbaren Auskoppelgrad bestimmten Leistungsanteil einer in einem (eW$_i$ oder zW$_j$) der beiden in diesem Kreuzungspunkt sich kreuzenden Wellenleiter (eW$_i$, zW$_j$) geführten optischen Welle in den anderen (zW$_j$ oder eW$_i$) dieser beiden Wellenleiter (eW$_i$, zW$_j$) einkoppelt, **dadurch gekennzeichnet,** daß

- ein optischer Koppler (K$_{ij}$) ein individuell zwischen zwei Schaltzuständen schaltbarer Koppler ist, der in einem Schaltzustand einen geringen Auskoppelgrad, der zumindest größenordnungsmäßig gleich oder kleiner als der Kehrwert (1/N oder 1/M) der Anzahl (N, M) der zweiten oder ersten Wellenleiter (zW$_j$, eW$_i$) ist, und in dem anderen Schaltzustand einen im Vergleich zu dem geringen Auskoppelgrad noch kleineren Auskoppelgrad aufweist, und/oder daß
- ein optischer Koppler (K$_{ij}$) ein nichtschaltbarer Koppler mit einem festen Auskoppelgrad ist.

2. Matrix nach Anspruch 1, **dadurch gekennzeichnet,** daß jeder optische Koppler (K$_{ij}$) ein individuell zwischen zwei Schaltzuständen schaltbarer Koppler ist, der in einem Schaltzustand einen geringen Auskoppelgrad, der zumindest größenordnungsmäßig gleich oder kleiner als der Kehrwert (1/N oder 1/M) der Anzahl (N, M) der zweiten oder ersten Wellenleiter (ZW$_j$, eW$_i$) ist, und in dem anderen Schaltzustand einen im Vergleich zu dem geringen Auskoppelgrad noch kleineren Auskoppelgrad aufweist.

3. Matrix nach Anspruch 1, **dadurch gekennzeichnet,** daß jeder optische Koppler (K$_{ij}$) ein unschalbarer Koppler mit einem festen Auskoppelgrad ist.

4. Matrix nach Anspruch 1 oder 3, **dadurch gekennzeichnet,** daß der feste Auskoppelgrad zumindest zweier verschiedener unschaltbarer Koppler (K$_{ij}$) verschieden ist.

5. Matrix nach Anspruch 1, 3 oder 4, **dadurch gekennzeichnet,** daß der feste Auskoppelgrad zumindest zweier verschiedener unschaltbarer Koppler (K$_{ij}$) gleich ist.

6. Matrix nach einem der vorhergehenden Ansprüche, **dadurch gekennzeichnet,** daß sich die ersten und zweiten Wellenleiter (eW$_i$, zW$_j$) im wesentlichen senkrecht kreuzen.

7. Matrix nach einem der Ansprüche, **dadurch gekennzeichnet,** daß die ersten und zweiten optischen Wellenleiter (eW$_i$, zW$_j$) auf einem Substrat (S) integriert sind.

8. Matrix nach einem der vorhergehenden Ansprüche, insbesondere nach Anspruch 7, **dadurch gekennzeichnet,** daß die ersten und zweiten optischen Wellenleiter (eW$_i$, zW$_j$) in einer gemeinsamen Ebene angeordnet sind und in jedem Kreuzungspunkt ein Wellenleiter (eW$_i$ oder zW$_j$) den anderen (zW$_j$ oder eW$_i$) schneidet.

9. Matrix nach Anspruch 1 oder 2 und 7 und 8, **dadurch gekennzeichnet,** daß ein erster und/oder zweiter optischer Wellenleiter (eW$_i$, zW$_j$) in einem Kreuzungspunkt aus einem elektrooptischen Material besteht und der schaltbare optische Koppler (K$_{ij}$) an diesem Kreuzungspunkt aus einer schaltbaren Elektrodeneinrichtung zur Erzeugung eines in dem elektro-optischen Material elektrisch erzeugten Bragg-Gitters besteht.

10. Matrix nach Anspruch 1 oder einem der Ansprüche 3 bis 5 und Anspruch 7 und 8, **dadurch gekennzeichnet,** daß ein erster und/oder zweiter optischer Wellenleiter (eW$_i$ zW$_j$) in einem Kreuzungspunkt einen Bereich relativ höherer Brechzahl aufweist und der unschaltbare optische Koppler (K$_{ij}$) durch eine schräg zu diesen beiden Wellenleitern (eW$_i$, zW$_j$) verlaufende und durch einen Brechzahlsprung definierte Grenzfläche (Gfl) dieses Bereichs mit relativ höherer Brechzahl besteht.

11. Anwendung einer Matrix nach einem der vorhergehenden Ansprüche als Synapsen-Matrix für ein künstliches Neuronales Netz.

12. Anwendung einer Matrix nach einem der Ansprüche 1 bis 5 als Matrix in einem Verteilnetzwerk.

13. Anwendung einer Matrix nach einem der Ansprüche 3 bis 5 oder Anspruch 10 als optischer Mischer.

FIG 1

FIG 2

FIG 3

EP 0 446 437 A2

# FIG 4